# EUROPEAN PATENT APPLICATION

(11) **EP 4 765 365 A1**
(43) Date of publication of application: **24.06.2026**
(21) Application number: 25864505.0
(22) Date of filing: 08.09.2025
(51) Int. Cl.: H01M 50/112, H01M 50/119, H01M 10/658, H01M 50/342

(54) **SECONDARY BATTERY**

(30) Priority: 02.10.2024 KR 20240134200
(71) Applicant: LG ENERGY SOLUTION, LTD., Seoul 07335 (KR)
(72) Inventor: LEE, Jung Hoon, Yuseong-Gu, Daejeon 34122 (KR); JUNG, Hye Mi, Yuseong-Gu, Daejeon 34122 (KR)
(74) Representative: Plasseraud IP
(86) International application number: PCT/KR2025/013852
(87) International publication number: WO 2026/075384

(57) **Abstract**

According to exemplary embodiments, a secondary battery is provided. The secondary battery may include: a cell case including an inner space; a thermal insulation partition wall separating the inner space into a plurality of accommodating spaces; electrode assemblies accommodated in each of the accommodating spaces; and venting covers overlapping each of the accommodating spaces. Each of the venting covers may be configured to rupture when an internal pressure of each corresponding accommodating space is equal to or greater than a reference pressure.

## Description

### [Technical Field]

The present disclosure relates to a secondary battery. This application claims the benefit of priority from Korean Patent Application No. 10-2024-0134200, filed on October 2, 2024, the entire contents disclosed therein are incorporated by reference into this disclosure.

### [Background]

Unlike primary batteries, secondary batteries can be charged and discharged multiple times. Secondary batteries are widely used as energy sources for various wireless devices such as handsets, laptops, wireless vacuum cleaners, etc. Recently, due to energy density improvements and economies of scale, the manufacturing cost per unit capacity of secondary batteries has dramatically decreased, and as the cruising distance of BEVs (battery electric vehicles) has increased to a level equivalent to fuel vehicles, the primary applications of secondary batteries are expanding from mobile devices to mobility.

Since secondary batteries require continuous use for long periods, it is necessary to effectively control heat generated during charge and discharge process. In the case of cooling of a secondary battery is not performed smoothly, a chain reaction may occur in which a temperature increase causes an increase in current, and the increase in current again causes a temperature increase. This may lead to a state of thermal runaway of the secondary battery.

When secondary batteries form a group in the form of a module or a pack, a thermal propagation phenomenon occurs in which other surrounding secondary batteries are continuously overheated due to thermal runaway occurring in any one secondary battery. Furthermore, there is a risk of fire as flammable gas discharged from the overheated secondary battery and heated electrodes become ignition sources. Accordingly, various studies are being conducted to reduce the risk of ignition of secondary batteries.

### [Summary]

### [Technical Problem]

The technical problem to be solved by the present disclosure is to provide a secondary battery with low ignition risk.

### [Technical Solution]

According to exemplary embodiments of the present disclosure for solving the above-described problem, a secondary battery is provided. The secondary battery may include: a cell case including a first accommodating space and a second accommodating space, a first venting hole overlapping the first accommodating space, and a second venting hole overlapping the second accommodating space; a first thermal insulation partition wall between the first accommodating space and the second accommodating space; a first electrode assembly in the first accommodating space of the cell case; a second electrode assembly in the second accommodating space of the cell case; a first venting cover coupled to the first venting hole of the cell case and configured to rupture when a pressure of the first accommodating space of the cell case is equal to or greater than a reference pressure; and a second venting cover coupled to the second venting hole of the cell case and configured to rupture when a pressure of the second accommodating space of the cell case is equal to or greater than the reference pressure.

The cell case may include a metal can.

The first thermal insulation partition wall may contact each of inner side surfaces, an inner lower surface, and an inner upper surface of the cell case.

The first thermal insulation partition wall may extend along a longitudinal direction of the cell case.

A melting temperature of the first thermal insulation partition wall may be 800°C or more and 2000°C or less.

The first thermal insulation partition wall may include one or more of Mica and Aerogel.

The cell case may further include a third accommodating space. The second accommodating space may be positioned between the first accommodating space and the third accommodating space. The cell case may further include a third venting hole overlapping the third accommodating space. The secondary battery may further include: a second thermal insulation partition wall disposed in the cell case to separate the second accommodating space and the third accommodating space of the cell case and including a thermal insulation material; a third electrode assembly accommodated in the third accommodating space of the cell case; and a third venting cover coupled to the third venting hole of the cell case and configured to rupture when a pressure of the third accommodating space of the cell case is equal to or greater than the reference pressure.

According to exemplary embodiments of the present disclosure for solving the above-described problem, a secondary battery is provided. The secondary battery may include: a cell case including an inner space; a thermal insulation partition wall separating the inner space into a plurality of accommodating spaces; electrode assemblies accommodated in each of the accommodating spaces; and venting covers overlapping each of the accommodating spaces. Each of the venting covers may be configured to rupture when an internal pressure of each corresponding accommodating space is equal to or greater than a reference pressure.

The cell case may further include venting holes coupled to each of the venting covers.

The thermal insulation partition wall may contact inner side surfaces, an inner lower surface, and an inner upper surface of the cell case.

The length of the thermal insulation partition wall may be equal to the length of each of the electrode assemblies. The height of the thermal insulation partition wall may be equal to the height of each of the electrode assemblies.

A thermal conductivity of the thermal insulation partition wall may be 0.1 W/m·K or less when measured at 25°C and 1 atm.

A melting temperature of the thermal insulation partition wall may be 800°C or more and 2000°C or less.

### [Advantageous Effects]

According to exemplary embodiments of the present disclosure, by separating regions accommodating electrode assemblies in a cell case and preventing heat propagation between the regions, the risk of ignition of a battery pack can be reduced.

The effects that can be obtained in exemplary embodiments of the present disclosure are not limited to the above-described effects, and other effects not mentioned can be derived and understood by a person skilled in the art from the following description. In other words, unintended effects of implementing the exemplary embodiments of the present disclosure may also be derived from the exemplary embodiments of the present disclosure by a person skilled in the art.

### [Brief Description of the Drawings]

FIG. 1 is a perspective view illustrating a secondary battery according to exemplary embodiments.
FIG. 2 is an exploded perspective view illustrating a secondary battery according to exemplary embodiments.
FIG. 3 to FIG. 6 are cross-sectional views illustrating a secondary battery according to exemplary embodiments.
FIG. 7 is a cross-sectional view illustrating a cell case according to exemplary embodiments.
FIG. 8 is a top view illustrating a cell case according to exemplary embodiments.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (first embodiment)

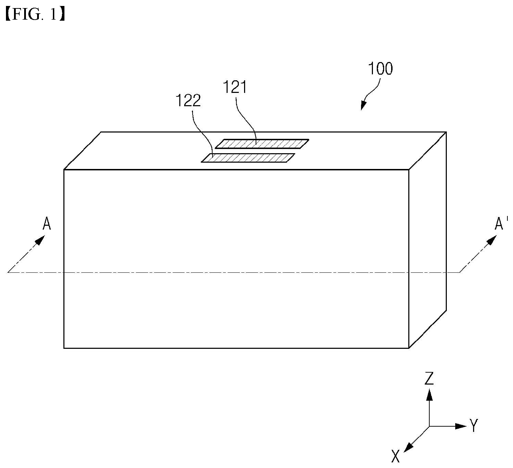

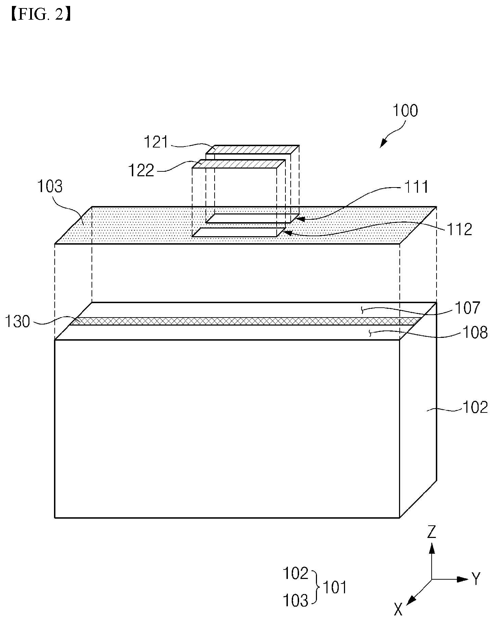

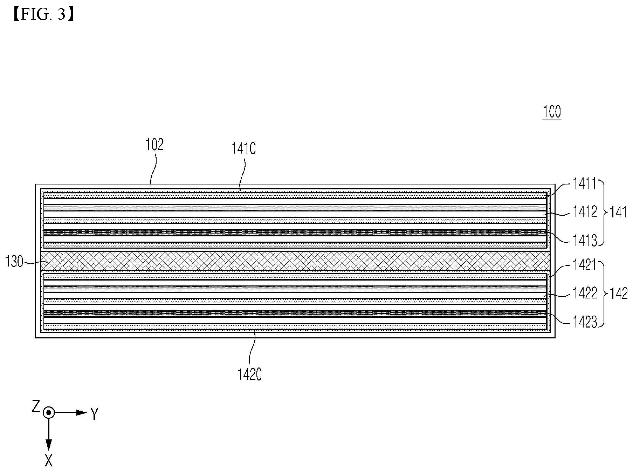

FIG. 1 is a perspective view illustrating a secondary battery 100 according to exemplary embodiments. FIG. 2 is an exploded perspective view illustrating a secondary battery 100 according to exemplary embodiments. FIG. 3 is a cross-sectional view illustrating a secondary battery 100 according to exemplary embodiments. FIG. 3 illustrates a cross-section along a cutting line A-A' of FIG. 1.

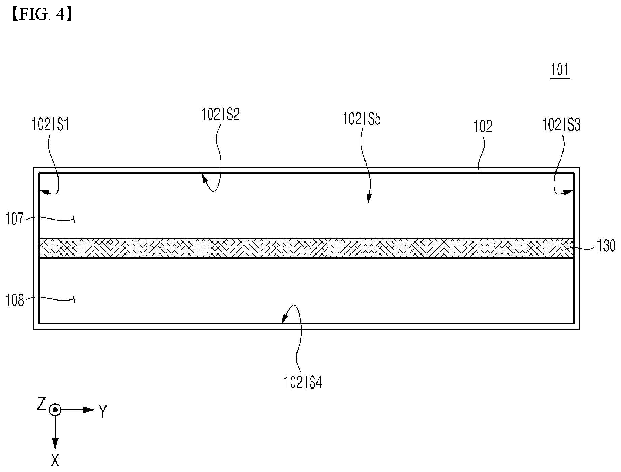

Referring to FIG. 1 to FIG. 4, the secondary battery 100 may include a cell case 101, a first venting cover 121, a second venting cover 122, a thermal insulation partition wall 130, a first electrode assembly 141, and a second electrode assembly 142.

The cell case 101 may include an inner space. The first electrode assembly 141 and the second electrode assembly 142 may be accommodated in the inner space of the cell case 101. The inner space of the cell case 101 may be separated into a first accommodating space 107 and a second accommodating space 108. The first electrode assembly 141 may be accommodated in the first accommodating space 107. The second electrode assembly 142 may be accommodated in the second accommodating space 108. The secondary battery 100 may further include an electrolyte injected into the first accommodating space 107 and the second accommodating space 108.

The thermal insulation partition wall 130 may be in the cell case 101. The thermal insulation partition wall 130 may separate the inner space of the cell case 101 into the first accommodating space 107 and the second accommodating space 108. The first accommodating space 107 and the second accommodating space 108 may not be connected to each other. Side surfaces of the thermal insulation partition wall 130 may be fixed to inner side surfaces 102IS1 and 102IS3 of the can 102, respectively. A lower surface of the thermal insulation partition wall 130 may be fixed to an inner lower surface 102IS5 of the can 102. An upper surface of the thermal insulation partition wall 130 may be fixed to the lower surface of the cap assembly 103. The lower surface of the cap assembly 103 refers to the same configuration as an inner upper surface of the cell case 101.

The thermal insulation partition wall 130 may have a width in an X direction, a length in a Y direction, and a height in a Z direction. The width of the thermal insulation partition wall 130 in the X direction may be smaller than the width of the cell case 101 in the X direction. The length of the thermal insulation partition wall 130 in the Y direction may be substantially equal to a spacing between opposing inner side surfaces 102IS1 and 102IS3 of the cell case 101. The length of the thermal insulation partition wall 130 in the Y direction may be substantially equal to the length of each of the electrode assemblies 141 and 142 in the Y direction. The height of the thermal insulation partition wall 130 in the Z direction may be substantially equal to a spacing between the inner lower surface 102IS5 of the cell case 101 and the lower surface of the cap assembly 103. The height of the thermal insulation partition wall 130 in the Z direction may be substantially equal to the height of each of the electrode assemblies 141 and 142.

The thermal insulation partition wall 130 may include a thermal insulation material. The thermal insulation partition wall 130 may include ceramic, polymer material, inorganic insulator, and the like. In exemplary embodiments, the thermal insulation partition wall 130 may include Mica. In exemplary embodiments, the thermal insulation partition wall 130 may include Aerogel. The thermal insulation partition wall 130 may prevent or delay heat transfer between the accommodating spaces 107 and 108. For example, in the case of a thermal runaway event occurring in the first electrode assembly 141, heat discharged from the first electrode assembly 141 may be accumulated in the first accommodating space 107. Since the second accommodating space 108 is physically separated from the first accommodating space 107 by the thermal insulation partition wall 130, propagation of heat and high-temperature gas from the first accommodating space 107 to the second accommodating space 108 may be prevented.

In exemplary embodiments, the thermal insulation partition wall 130 may have a high melting temperature. In exemplary embodiments, the thermal insulation partition wall 130 may have low thermal conductivity.

In exemplary embodiments, a melting temperature of the thermal insulation partition wall 130 may be about 300°C or more. In exemplary embodiments, the melting temperature of the thermal insulation partition wall 130 may be about 600°C or more. In exemplary embodiments, the melting temperature of the thermal insulation partition wall 130 may be about 800°C or more. In exemplary embodiments, the melting temperature of the thermal insulation partition wall 130 may be about 1000°C or more. In exemplary embodiments, the melting temperature of the thermal insulation partition wall 130 may be about 1500°C or more.

In exemplary embodiments, the melting temperature of the thermal insulation partition wall 130 may be about 4000°C or less. In exemplary embodiments, the melting temperature of the thermal insulation partition wall 130 may be about 3500°C or less. In exemplary embodiments, the melting temperature of the thermal insulation partition wall 130 may be about 3000°C or less. In exemplary embodiments, the melting temperature of the thermal insulation partition wall 130 may be about 2500°C or less. In exemplary embodiments, the melting temperature of the thermal insulation partition wall 130 may be about 2000°C or less.

In exemplary embodiments, a thermal conductivity of the thermal insulation partition wall 130 may be about 20 W/m·K or less. In exemplary embodiments, the thermal conductivity of the thermal insulation partition wall 130 may be about 10 W/m·K or less. In exemplary embodiments, the thermal conductivity of the thermal insulation partition wall 130 may be about 5 W/m·K or less. In exemplary embodiments, the thermal conductivity of the thermal insulation partition wall 130 may be about 4 W/m·K or less. In exemplary embodiments, the thermal conductivity of the thermal insulation partition wall 130 may be about 2.5 W/m·K or less. In exemplary embodiments, the thermal conductivity of the thermal insulation partition wall 130 may be about 1 W/m·K or less. In exemplary embodiments, the thermal conductivity of the thermal insulation partition wall 130 may be about 0.3 W/m·K or less. In exemplary embodiments, the thermal conductivity of the thermal insulation partition wall 130 may be about 0.1 W/m·K or less. The thermal conductivity of the thermal insulation partition wall 130 described above may be measured at room temperature (about 25°C) and atmospheric pressure (1 atm).

The cell case 101 may include a can 102 and a cap assembly 103. The can 102 may be a metal can. The can 102 may have a columnar shape with an open upper surface. The can 102 may have a rectangular columnar shape. The can 102 may include inner side surfaces 102IS1, 102IS2, 102IS3, and 102IS4 and an inner lower surface 102IS5. The cap assembly 103 may be coupled to the open upper portion of the can 102. The can 102 and the cap assembly 103 may define the inner space of the cell case 101. The cap assembly 103 may include a metal material such as aluminum. The can 102 may include a metal material such as aluminum.

The cap assembly 103 may include a first venting hole 111 and a second venting hole 112. The first venting hole 111 may overlap the first accommodating space 107 in the Z direction. The first venting hole 111 may overlap the first electrode assembly 141 in the Z direction. The second venting hole 112 may overlap the second accommodating space 108 in the Z direction. The second venting hole 112 may overlap the second electrode assembly 142 in the Z direction.

The first venting cover 121 may be coupled to the first venting hole 111. The first venting cover 121 may have a width of the same size as a width of the first venting hole 111 in the X direction. The first venting cover 121 may have a width greater than the width of the first venting hole 111 in the X direction. The first venting cover 121 may have a length of the same size as the length of the first venting hole 111 in the Y direction. The first venting cover 121 may have a length greater than the length of the first venting hole 111 in the Y direction. The first venting cover 121 may overlap the first accommodating space 107 in the Z direction. The first venting cover 121 may overlap the first electrode assembly 141 in the Z direction.

The second venting cover 122 may be coupled to the second venting hole 112. The second venting cover 122 may have a width of the same size as a width of the second venting hole 112 in the X direction. The second venting cover 122 may have a width greater than the width of the second venting hole 112 in the X direction. The second venting cover 122 may have a length of the same size as the length of the second venting hole 112 in the Y direction. The second venting cover 122 may have a length greater than the length of the second venting hole 112 in the Y direction. The second venting cover 122 may overlap the second accommodating space 108 in the Z direction. The second venting cover 122 may overlap the second electrode assembly 142 in the Z direction.

According to an internal pressure change of the cell case 101, each of the venting covers 121 and 122 may rupture from the corresponding venting holes 111 and 112. When the internal pressure of the cell case 101 is less than a reference pressure, the first venting cover 121 seals the first venting hole 111, and the second venting cover 122 seals the second venting hole 112, thereby blocking the first electrode assembly 141 and the second electrode assembly 142 from the outside. In the case of a thermal runaway event in one of the electrode assemblies 141 and 142, one of the first and second venting covers 121 and 122 overlapping one of the electrode assemblies 141 and 142 having the thermal runaway event may rupture.

For example, in the case of a thermal runaway event occurring in the first electrode assembly 141, the first venting cover 121 coupled to the first venting hole 111 may rupture. In the case of the first venting cover 121 rupturing, the first venting hole 111 is opened, and a passage for venting may be provided to the first accommodating space 107. Heat and high-temperature gas generated in the first electrode assembly 141 may be discharged to the outside through the first venting hole 111. Thereby, a risk of heat and high-temperature gas generated in the first electrode assembly 141 propagating to the adjacent second electrode assembly 142 may be prevented.

Each of the first electrode assembly 141 and the second electrode assembly 142 may be in the inner space of the cell case 101. The first electrode assembly 141 may be in the first accommodating space 107. The second electrode assembly 142 may be in the second accommodating space 108.

The first electrode assembly 141 includes a plurality of positive electrodes 1411, a plurality of negative electrodes 1413, and a plurality of separators 1412 interposed therebetween, stacked sequentially. The second electrode assembly 142 includes a plurality of positive electrodes 1421, a plurality of negative electrodes 1423, and a plurality of separators 1422 interposed therebetween, stacked sequentially. The first electrode assembly 141 and the second electrode assembly 142 may be stacked electrode assemblies. However, structures of the first electrode assembly 141 and the second electrode assembly 142 are not limited thereto. In exemplary embodiments, the first electrode assembly 141 may be an electrode assembly of a jelly-roll structure, and the second electrode assembly 142 may be a stacked electrode assembly.

Each of the plurality of positive electrodes 1411 and 1421 may include a current collector. The positive electrode current collector may be an aluminum foil. Each of the plurality of positive electrodes 1411 and 1421 may include an active material layer coated on one surface or both surfaces of the current collector. The positive electrode active material layer may include LiCoO₂, LiNiO₂, LiNi₁₋ₓCoₓO₂(0.2≤x≤0.5), LiNi_{1/3}Mn_{1/3}Co_{1/3}O₂, LiNi_{0.5}Mn_{0.5}O₂, LiMn₂O₄, LiMn₂₋ₓMₓO₄ (M is Al or Li, etc.), LiFePO₄, and the like. The plurality of negative electrodes 1413 and 1423 may include a current collector. The negative electrode current collector may be a copper foil or a nickel foil. Each of the plurality of negative electrodes 1413 and 1423 may include an active material layer coated on one surface or both surfaces of the current collector. The negative electrode active material layer may include lithium metal, graphite, coke, silicon, tin, and the like. The plurality of separators 1412 and 1422 may block physical contact between the plurality of positive electrodes 1411 and 1421 and the plurality of negative electrodes 1413 and 1423. Each of the plurality of separators 1412 and 1422 may include Polyethylene, Polypropylene, Polyolefin, PVdF (Polyvinylidene fluoride), inorganic nanoparticles (SiO₂, TiO₂, Al₂O₃, ZrO₂, etc.), and the like.

A first electrode cover 141C may surround the surface of the first electrode assembly 141. The first electrode cover 141C may contact inner side surfaces 102IS1, 102IS2, and 102IS3 of the cell case 101 and one side surface of the thermal insulation partition wall 130. A second electrode cover 142C may surround the surface of the second electrode assembly 142. The second electrode cover 142C may contact inner side surfaces 102IS1, 102IS3, and 102IS4 of the cell case 101 and another side surface of the thermal insulation partition wall 130.

### (second embodiment)

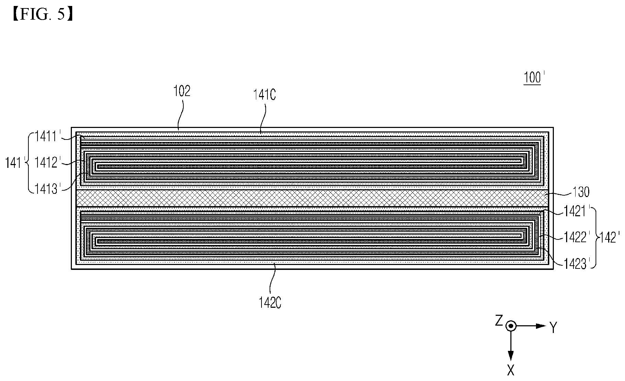

FIG. 5 is a cross-sectional view illustrating a secondary battery 100' according to exemplary embodiments. In FIG. 5, components having the same reference numerals as in FIG. 1 to FIG. 3 may apply the descriptions described above in the first embodiment, and the same descriptions will be omitted. Hereinafter, components of the second embodiment that differ from the first embodiment will be mainly described.

The secondary battery 100' may include a first electrode assembly 141' and a second electrode assembly 142'. The first electrode assembly 141' may have a winding structure of a plurality of positive electrodes 1411', a plurality of negative electrodes 1413', and separators 1412' interposed therebetween. The first electrode assembly 141' may be a jelly-roll type electrode assembly.

The second electrode assembly 142' may have a winding structure of a plurality of positive electrodes 1421', a plurality of negative electrodes 1423', and separators 1422' interposed therebetween. The second electrode assembly 142' may be a jelly-roll type electrode assembly.

### (third embodiment)

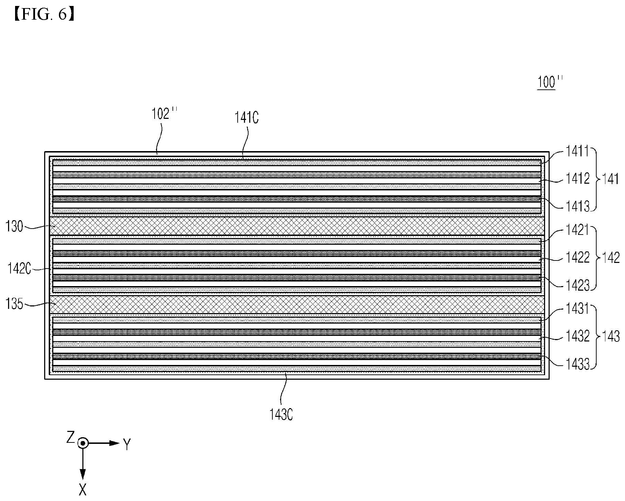

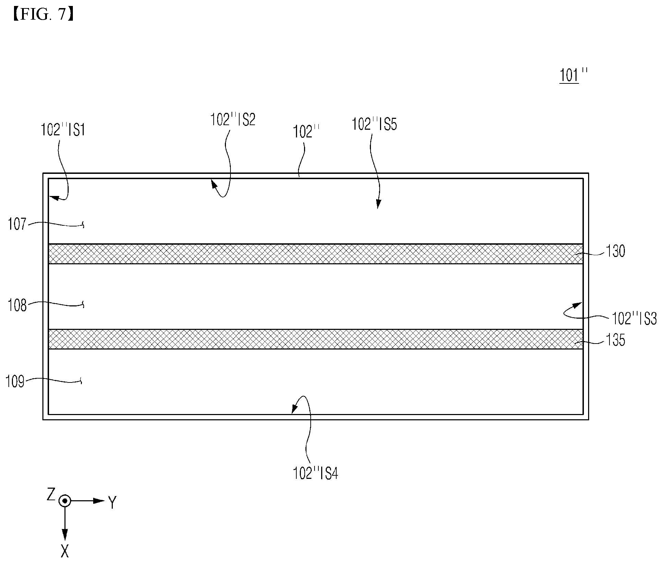

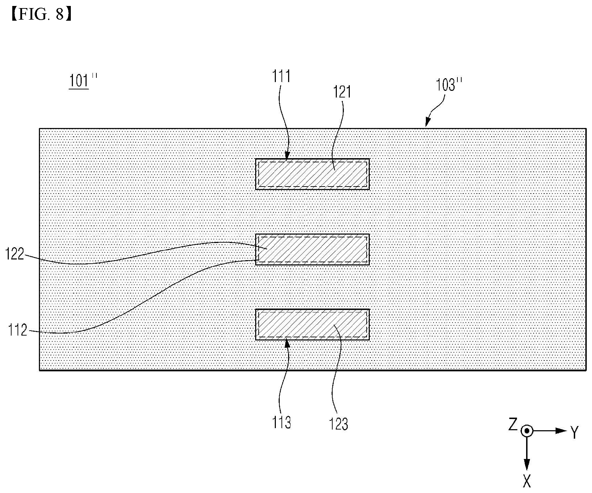

FIG. 6 is a cross-sectional view illustrating a secondary battery 100" according to exemplary embodiments. FIG. 7 is a cross-sectional view illustrating a cell case 101" according to exemplary embodiments. FIG. 8 is a top view illustrating a cell case 101" according to exemplary embodiments.

In FIG. 6 to FIG. 8, components having the same reference numerals as in FIG. 1 to FIG. 3 may apply the descriptions described above in the first embodiment, and the same descriptions will be omitted. Hereinafter, components of the third embodiment that differ from the first embodiment will be mainly described.

The secondary battery 100" may include a cell case 101", and a first electrode assembly 141, a second electrode assembly 142, and a third electrode assembly 143 accommodated in an inner space of the cell case 101 ".

The inner space of the cell case 101" may include a first accommodating space 107, a second accommodating space 108, and a third accommodating space 109. The second accommodating space 108 may be positioned between the first accommodating space 107 and the third accommodating space 109. The first accommodating space 107, the second accommodating space 108, and the third accommodating space 109 may be sequentially positioned based on the X direction. The first accommodating space 107 may be separated from the second accommodating space 108 by a first thermal insulation partition wall 130. The first accommodating space 107 may not be connected to the second accommodating space 108. The second accommodating space 108 may be separated from the third accommodating space 109 by a second thermal insulation partition wall 135. The second accommodating space 108 may not be connected to the third accommodating space 109.

Side surfaces of the first thermal insulation partition wall 130 may be fixed to inner side surfaces 102"IS1 and 102"IS3 of the can 102", respectively. A lower surface of the thermal insulation partition wall 130 may be fixed to an inner lower surface 102"IS5 of the can 102". An upper surface of the thermal insulation partition wall 130 may be fixed to the lower surface of the cap assembly 103". Side surfaces of the second thermal insulation partition wall 135 may be fixed to inner side surfaces 102"IS1 and 102"IS3 of the can 102", respectively. The lower surface of the thermal insulation partition wall 130 may be fixed to the inner lower surface 102"IS5 of the can 102". The upper surface of the thermal insulation partition wall 130 may be fixed to the lower surface of the cap assembly 103".

The first thermal insulation partition wall 130 may have a width in the X direction, a length in the Y direction, and a height in the Z direction. The width of the first thermal insulation partition wall 130 in the X direction may be smaller than the width of the cell case 101" in the X direction. The length of the first thermal insulation partition wall 130 in the Y direction may be substantially equal to a spacing between opposing inner side surfaces 102"IS1 and 102"IS3 of the cell case 101". The length of the first thermal insulation partition wall 130 in the Y direction may be substantially equal to the length of each of the electrode assemblies 141 and 142 in the Y direction. The height of the first thermal insulation partition wall 130 in the Z direction may be substantially equal to a spacing between the inner lower surface 102"IS5 of the cell case 101" and the lower surface of the cap assembly 103". The height of the first thermal insulation partition wall 130 in the Z direction may be substantially equal to the height of each of the electrode assemblies 141 and 142.

The second thermal insulation partition wall 135 may have a width in the X direction, a length in the Y direction, and a height in the Z direction. The width of the second thermal insulation partition wall 135 in the X direction may be smaller than the width of the cell case 101" in the X direction. The length of the second thermal insulation partition wall 135 in the Y direction may be substantially equal to a spacing between opposing inner side surfaces 102"IS1 and 102"IS3 of the cell case 101". The length of the second thermal insulation partition wall 135 in the Y direction may be substantially equal to the length of each of the electrode assemblies 141 and 142 in the Y direction. The height of the second thermal insulation partition wall 135 in the Z direction may be substantially equal to a spacing between the inner lower surface 102"IS5 of the cell case 101" and the lower surface of the cap assembly 103". The height of the second thermal insulation partition wall 135 in the Z direction may be substantially equal to the height of each of the electrode assemblies 141 and 142.

The first thermal insulation partition wall 130 and the second thermal insulation partition wall 135 may each include a thermal insulation material. The first thermal insulation partition wall 130 and the second thermal insulation partition wall 135 may each include ceramic, polymer material, inorganic insulator, and the like. In exemplary embodiments, each of the first thermal insulation partition wall 130 and the second thermal insulation partition wall 135 may include Mica. In exemplary embodiments, each of the first thermal insulation partition wall 130 and the second thermal insulation partition wall 135 may include Aerogel. The first thermal insulation partition wall 130 and the second thermal insulation partition wall 135 may prevent or delay heat transfer between the accommodating spaces. For example, in the case of a thermal runaway event occurring in the second electrode assembly 142, heat discharged from the second electrode assembly 142 may be accumulated in the second accommodating space 108. Since the first accommodating space 107 is physically separated from the second accommodating space 108 by the first thermal insulation partition wall 130, propagation of heat and high-temperature gas from the second accommodating space 108 to the first accommodating space 107 may be prevented.

The first electrode assembly 141 may include a plurality of positive electrodes 1411, a plurality of negative electrodes 1413, and a plurality of separators 1412 interposed therebetween, stacked sequentially. The second electrode assembly 142 may include a plurality of positive electrodes 1421, a plurality of negative electrodes 1423, and a plurality of separators 1422 interposed therebetween, stacked sequentially. The third electrode assembly 143 may include a plurality of positive electrodes 1431, a plurality of negative electrodes 1433, and a plurality of separators 1432 interposed therebetween, stacked sequentially. The first electrode assembly 141, the second electrode assembly 142, and the third electrode assembly 143 may each be a stacked electrode assembly. However, structures of the electrode assemblies 141, 142, and 143 are not limited thereto. In exemplary embodiments, each of the electrode assemblies 141, 142, and 143 may be a stacked electrode assembly or an electrode assembly of a jelly-roll structure.

A first electrode cover 141C may surround the surface of the first electrode assembly 141. The first electrode cover 141C may contact inner side surfaces 102"IS1, 102"IS2, and 102"IS3 of the cell case 101", an inner lower surface 102"IS5 of the cell case 101, and a side surface of the first thermal insulation partition wall 130. A second electrode cover 142C may surround a surface of the second electrode assembly 142. The second electrode cover 142C may contact inner side surfaces 102"IS1 and 102"IS3 of the cell case 101, an inner lower surface 102"IS5 of the cell case 101, a side surface of the first thermal insulation partition wall 130, and a side surface of the second thermal insulation partition wall 135. A third electrode cover 143C may surround a surface of the third electrode assembly 143. The third electrode cover 143C may contact inner side surfaces 102"IS1, 102"IS3, and 102"IS4 of the cell case 101", an inner lower surface 102"IS5 of the cell case 101, and a side surface of the second thermal insulation partition wall 135.

The cap assembly 103" may include a first venting hole 111, a second venting hole 112, and a third venting hole 113. The first venting hole 111 may overlap the first accommodating space 107 in the Z direction. The first venting hole 111 may overlap the first electrode assembly 141 in the Z direction. The second venting hole 112 may overlap the second accommodating space 108 in the Z direction. The second venting hole 112 may overlap the second electrode assembly 142 in the Z direction. The third venting hole 113 may overlap the third accommodating space 109 in the Z direction. The third venting hole 113 may overlap the third electrode assembly 143 in the Z direction. The can 102" and the cap assembly 103" may constitute the cell case 101".

The secondary battery 100" may include a first venting cover 121, a second venting cover 122, and a third venting cover 123. The first venting cover 121 may be coupled to the first venting hole 111 to seal the first venting hole 111. The second venting cover 122 may be coupled to the second venting hole 112 to seal the second venting hole 112. The third venting cover 123 may be coupled to the third venting hole 113 to seal the third venting hole 113.

According to an internal pressure change of the cell case 101", each of the venting covers 121, 122, and 123 may rupture from the corresponding venting holes 111, 112, and 123. When the internal pressure of the cell case 101" is less than a reference pressure, the first venting cover 121 may seal the first venting hole 111, the second venting cover 122 may seal the second venting hole 112, and the third venting cover 123 may seal the third venting hole 113. When the internal pressure of the cell case 101" is less than the reference pressure, the first electrode assembly 141, the second electrode assembly 142, and the third electrode assembly 143 may be blocked from the outside. In the case of a thermal runaway event in one of the electrode assemblies 141, 142, and 143, one of the first to third venting covers 121, 122, and 123 overlapping one of the electrode assemblies 141, 142, and 143 having the thermal runaway event may rupture.

For example, in the case of a thermal runaway event occurring in the second electrode assembly 142, the second venting cover 122 coupled to the second venting hole 112 may rupture. In the case of the second venting cover 122 rupturing, the second venting hole 112 is opened, and a passage for venting may be provided to the second accommodating space 108. Heat and high-temperature gas generated in the second electrode assembly 142 may be discharged to the outside through the second venting hole 112. Thereby, a risk of heat and high-temperature gas generated in the second electrode assembly 142 propagating to the adjacent first electrode assembly 141 or third electrode assembly 143 may be prevented.

Although FIG. 6 to FIG. 8 illustrate the secondary battery 100" accommodating three electrode assemblies 141, 142, and 143, the number of electrode assemblies is not limited thereto. As the number of electrode assemblies increases, the number of accommodating spaces of the cell case 101, the number of venting holes of the cap assembly 103", and the number of venting covers may also correspondingly increase.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

## Claims

1. A secondary battery, comprising:
a cell case comprising a first accommodating space and a second accommodating space, a first venting hole overlapping the first accommodating space, and a second venting hole overlapping the second accommodating space;
a first thermal insulation partition wall between the first accommodating space and the second accommodating space;
a first electrode assembly in the first accommodating space of the cell case;
a second electrode assembly in the second accommodating space of the cell case;
a first venting cover coupled to the first venting hole of the cell case and configured to rupture when a pressure of the first accommodating space of the cell case is equal to or greater than a reference pressure; and
a second venting cover coupled to the second venting hole of the cell case and configured to rupture when a pressure of the second accommodating space of the cell case is equal to or greater than the reference pressure.

2. The secondary battery of claim 1, wherein the cell case comprises a metal can.

3. The secondary battery of claim 1, wherein the first thermal insulation partition wall contacts each of inner side surfaces, an inner lower surface, and an inner upper surface of the cell case.

4. The secondary battery of claim 1, wherein the first thermal insulation partition wall extends along a longitudinal direction of the cell case.

5. The secondary battery of claim 1, wherein a melting temperature of the first thermal insulation partition wall is 800°C or more and 2000°C or less.

6. The secondary battery of claim 1, wherein the first thermal insulation partition wall comprises one or more of Mica and Aerogel.

7. The secondary battery of claim 1, wherein the cell case further comprises a third accommodating space,
wherein the second accommodating space is positioned between the first accommodating space and the third accommodating space,
wherein the cell case further comprises a third venting hole overlapping the third accommodating space,
wherein the secondary battery further comprises:
a second thermal insulation partition wall disposed in the cell case to separate the second accommodating space and the third accommodating space of the cell case and comprising a thermal insulation material;
a third electrode assembly accommodated in the third accommodating space of the cell case; and
a third venting cover coupled to the third venting hole of the cell case and configured to rupture when a pressure the third accommodating space of the cell case is equal to or greater than the reference pressure.

8. A secondary battery, comprising:
a cell case comprising an inner space;
a thermal insulation partition wall separating the inner space into a plurality of accommodating spaces;
electrode assemblies accommodated in each of the accommodating spaces; and
venting covers overlapping each of the accommodating spaces,
wherein each of the venting covers is configured to rupture when an internal pressure of each corresponding accommodating space is equal to or greater than a reference pressure.

9. The secondary battery of claim 8, wherein the cell case further comprises venting holes coupled to each of the venting covers.

10. The secondary battery of claim 8, wherein the thermal insulation partition wall contacts inner side surfaces, an inner lower surface, and an inner upper surface of the cell case.

11. The secondary battery of claim 8, wherein the length of the thermal insulation partition wall is equal to the length of each of the electrode assemblies,
wherein the height of the thermal insulation partition wall is equal to the height of each of the electrode assemblies.

12. The secondary battery of claim 8, wherein a thermal conductivity of the thermal insulation partition wall is 0.1 W/m·K or less when measured at 25°C and 1 atm.

13. The secondary battery of claim 8, wherein a melting temperature of the thermal insulation partition wall is 800°C or more and 2000°C or less.
